# EUROPEAN PATENT SPECIFICATION

(11) **EP 1 562 348 B1**
(45) Date of publication and mention of the grant of the patent: **02.04.2008**
(21) Application number: 05250636.7
(22) Date of filing: 04.02.2005
(51) Int. Cl.: H04L 29/06

(54) **Method and Apparatus for Connecting Heterogeneous Protocol Nodes**
Verfahren und Vorrichtung zur Verbindung von Knoten mit heterogenen Kommunikationsprotokollen
Procédé et dispositif pour l'interconnexion de noeuds utilisant protocols hétérogènes

(30) Priority: 06.02.2004 KR 2004007827
(43) Date of publication of application: 10.08.2005
(73) Proprietor: SAMSUNG ELECTRONICS CO., LTD., Suwon-si, Gyeonggi-do (KR)
(72) Inventor: Kim, Pyung-soo, Seoul (KR); Kim, Sun-Woo, Gwonseon-gu Suwon-si Gyeonggi-do (KR)
(74) Representative: Waddington, Richard

(56) References cited:
- EP-A- 0 667 693
- EP-A- 1 059 790
- KR-A- 20020 067 106
- US-A- 2002 199 019
- US-A1- 2001 002 183
- US-A1- 2002 159 461
- WADDINGTON D.G.; FANGZHE CHANG: 'Realizing the Transition to IPv6' IEEE COMMUNICATIONS MAGAZINE vol. 40, no. 6, June 2002, IEEE SERVICE CENTER, PISCATAWAY, US, pages 138 - 148, XP011092875
- YAMAMOTO IIJ RESEARCH LABORATORY M. SUMIKAWA HITACHI K. LTD: 'Overview of Transition Techniques for IPv6-only to Talk to IPv4-only Communication' IETF STANDARD-WORKING-DRAFT vol. NGTRANS, no. 3, March 2000, INTERNET ENGINEERING TASK FORCE, IETF, CH, XP015024369

## Description

Embodiments of the present invention relate to a method, medium, and apparatus for connecting nodes that use heterogeneous protocols, and more particularly, to a method and an apparatus for connecting internet protocol version 4 (IPv4) nodes to internet protocol version 6 (IPv6) nodes, and also for connecting non-mobile nodes to mobile nodes.

Nodes existing in a network including Internet protocol version 4 (IPv4) and Internet protocol version 6 (IPv6) may not be equipped with an IPv4/IPv6 conversion function in an IP layer of the network. In this case, IPv4 nodes and IPv6 nodes cannot be connected with each other in the prior art. In addition, IP nodes present in a mobile network may not be equipped with a mobile IP function in IP layers of the network. Accordingly, non-mobile nodes having no mobile IP function cannot be connected with mobile nodes having a mobile IP function. Moreover, since such an IP layer is included in the kernel level which users or terminal suppliers cannot manage, it is difficult for users or terminal suppliers to solve the above problems.

EP 0,667,693 discloses a method of operating a glassware forming machine comprising a database operating on one protocol and a workstation operating on a second protocol.

US 2002/015941 discloses a translator for coupling an IPv6 network and an IPv4 network.

US 2002/0199019 discloses a communication system that distributes the functions of a socket abstraction layer between devices.

US 2001/0021183 discloses the introduction of a pipeline module below an application layer.

Embodiments of the present invention provide a method, medium, and apparatus for connecting nodes that use heterogeneous protocols, and more particularly, to provide a method, medium, and apparatus which a user or a terminal supplier can implement easily.

According to the present invention there is provided an apparatus and method as set forth in the appended claims. Preferred features of the invention will be apparent from the dependent claims, and the description which follows.

Additional aspects and/or advantages of the invention will be set forth in part in the description which follows and, in part, will be obvious from the description, or may be learned by practice of the invention.

All of the features described herein may be combined with any of the above aspects, in any combination.

For a better understanding of the invention, and to show how embodiments of the same may be carried into effect, reference will now be made, by way of example, to the accompanying diagrammatic drawings in which:
FIG. 1 is a configuration diagram of a network environment, according to an exemplary embodiment of the present invention;
FIG. 2 is a configuration diagram of a network environment, according to an exemplary embodiment of the present invention;
FIG. 3 is a configuration diagram of another network environment, according to an exemplary embodiment of the present invention;
FIG. 4 is a configuration diagram of still another network environment, according to an exemplary embodiment of the present invention;
FIG. 5 is a configuration diagram of yet another network environment, according to an exemplary embodiment of the present invention;
Fig. 6 is a flowchart of a method of connecting heterogeneous protocol nodes, according to an exemplary embodiment of the present invention;
FIG. 7 is a flowchart of another method of connecting heterogeneous protocol nodes, according to an exemplary embodiment of the present invention;
FIG. 8 is a flowchart of still another method of connecting heterogeneous protocol nodes, according to an exemplary embodiment of the present invention; and
FIG. 9 is a flowchart of yet another method of connecting heterogeneous protocol nodes, according to an exemplary embodiment of the present invention.

Reference will now be made in detail to the embodiments of the present invention, examples of which are illustrated in the accompanying drawings, wherein like reference numerals refer to the like elements throughout. The embodiments are described below to explain the present invention by referring to the figures.

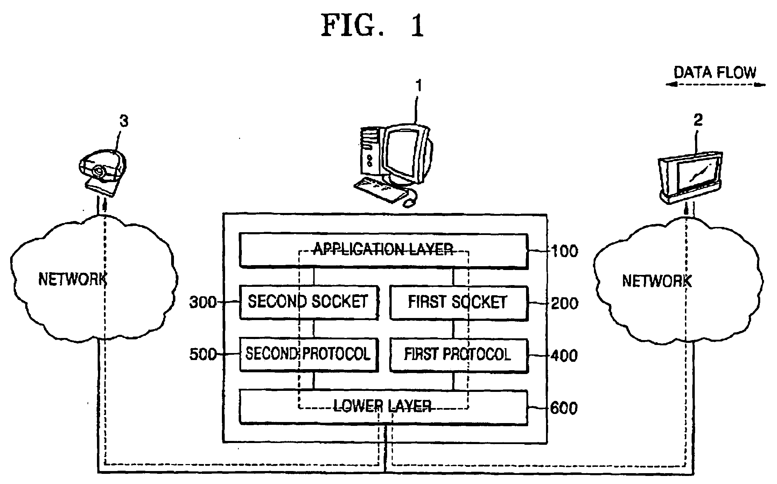

FIG. 1 is a configuration diagram of a network environment, according to an exemplary embodiment of the present invention.

Referring to FIG. 1, a network environment may include nodes 1, 2, and 3. According to this embodiment of the present invention, the node 1 may be equipped with a dual stack including both protocol stacks using a first protocol and a second protocol, with the node 2 using the first protocol, and the node 3 using the second protocol.

Referring to FIG. 1, the dual stack includes an application layer 100, a first socket 200, a second socket 300, a first protocol 400, a second protocol 500, and a lower layer 600 according, to th embodiment of the present invention. In the dual stack, the right stack includes the first protocol 400 and the left stack includes the second protocol 500. The application layer 100 and the lower layer 600 of the dual stack may be common layers.

The node 1 generates the first socket 200, which is an application program interface (API) to be used for a first protocol based communication, and a second socket 300, which is an API to be used for the second protocol based communication by calling functions for connection with specific subroutines in the application layer 100. Here, the specific subroutine relates to generating sockets.

The node 1 communicates with the first node 2, which uses the first protocol 400 through the first socket 200 generated by calling functions for connection with specific subroutines in the application layer, and with the second node 3, which uses the second protocol 500 through the second socket 300 generated by calling functions for connection with specific subroutines in the application layer. Here, specific subroutines relate to communicating through sockets. In other words, the data transmitted from the node 2, which uses the first protocol 400 is transferred to the node 1 via a network. The data received by the node 1 passes the lower layer 600, the first protocol 400 and the first socket 200, and then arrives at the application layer 100. The data arriving at the application layer 100 passes the second socket 300, the second protocol 500 and the lower layer 600. The node 3 receives the data having passed the lower layer 600 via a network. The reverse flow of data can also similarly be established.

As described above, the node 1 communicates with the first node 2, which uses the first protocol 400 through the first socket 200, and with the second node 3, using the second protocol 500 through the second socket 300. Accordingly, even when layers of the kernel level, which users or terminal suppliers cannot manage, that is, the first protocol 400 and the second protocol 500 do not include a conversion mechanism between the first protocol 400 and the second protocol 500, the node 1 implements the communication with the node 2 and the node 3. Here, the first protocol 400 may be IPv6 and the second protocol 500 may be IPv4, or vice versa. Also the first protocol 400 may be a mobile IP and the second protocol 500 may be a non-mobile IP, or vice versa. Each of the above matters will now be described more specifically below.

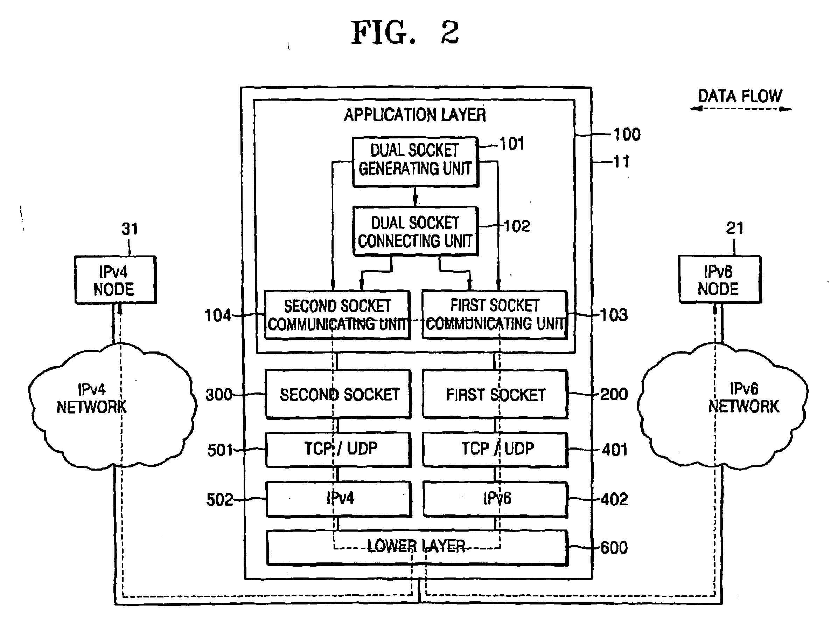

FIG. 2 is a configuration diagram of a first network environment, according to an exemplary embodiment of the present invention.

Referring to FIG. 2, the network environment may include a node 11 including an apparatus for connecting heterogeneous protocol nodes, an IPv6 node 21 that corresponds to a client, and an IPv4 node 31 that corresponds to a server, according to this embodiment of the present invention. The node 11 plays a role as a server, corresponding to the IPv6 node 21, and concurrently plays a role as a client, corresponding to the IPv4 node 31.

Referring to FIG. 2, the apparatus for connecting heterogeneous protocol nodes includes a dual socket generating unit 101, a dual socket connecting unit 102, a first socket communicating unit 103, and a second socket communicating unit 104, according to this embodiment of the present invention. As shown in FIG. 2, the apparatus for connecting heterogeneous protocol nodes is mounted on an application layer 100.

The dual socket generating unit 101 generates a first socket 200 to be used for IPv6 communication of any application program and the second socket 300 to be used for IPv4 communication of the application program. In more detail, the dual socket generating unit 101, as a server and client, generates the first socket 200 by calling a socket ( ), i.e., a socket function, in the application layer 100, the socket ( ) including information about IPv6. The socket ( ) is defined as a type of int socket (int family, int type, int protocol). As an example, PF_INET can be written in a family field of a socket ( ) for generating the first socket 200, to denote that the Internet protocol family is used, SOCK_STREAM can be written in a type field to denote that TCP (transmission control protocol) of connection oriented communication is used, and IPv6 can be written in a protocol field to indicate use of IPv6. If UDP (user datagram protocol) of a non-connection oriented communication is used, instead of the SOCK_STREAM, SOCK_DGRAM can be written in a type field. In addition, the dual socket generating unit 101 generates the second socket 300 by calling a socket ( ) in the application layer 100, with the socket ( ) including information about IPv4, except that IPv4 is written in a protocol field of a socket ( ) so as to identify use of IPv4, noting that a socket ( ) for generating the second socket 300 is identical to the socket ( ) for generating the first socket 200 .

Moreover, the dual socket generating unit 101, as a server, connects an address of the node 11 with the first socket 200 by calling a bind ( ) connect function in the application layer 100, with the connect function including information about the first socket 200 and an address of the node 11 set as the destination of the IPv6 node 21. The bind ( ) is defined as a type of int bind (int sockfd, struct sockaddr *myaddr, int addrlen). A socket descriptor of the first socket 200 is written in a sockfd field of a bind ( ) for connecting an address with the first socket 200, an address structure including an IPv6 address and a port number, which are supplied by TCP/UDP 401 and IPv6 402, is written in a myaddr field, and a size of the address structure is written in an addrlen field. The bind ( ) is called in order to connect the IPv6 address and a port number of the node 11 known by IPv6 node 21 with a socket descriptor of the first socket 200 because the socket descriptor of the first socket 200 is known and used by only an application program of the node 11.

The dual socket connecting unit 102 connects the first socket 200 and the second socket 300, generated in the dual socket generating unit 101, with the IPv6 node 21 and the IPv4 node 31, respectively. More specifically, the dual socket connecting unit 112, as a server, waits to receive a connection request of which destination is an address connected with the first socket 200, by calling a listen ( ), of a wait function, in an application layer 100, the listen ( ) including information about the first socket 200. The listen ( ) is defined as a type of int listen (int sockfd, int backlog). A socket descriptor of the first socket 200 is written in a sockfd field of a listen ( ), for receiving a connection request of which destination is an address connected with the first socket 200, and the maximum number of connection requests available to be waited for is written in a backlog field.

Further, the dual socket connecting unit 102, as a server, admits the received connection request by calling an accept ( ), of an accept function, in the application layer 100, with the accept function including information about the first socket 200 and an address of the IPv6 node 21 that sent the connection request. Here, a new socket is generated for one to one communication with a process, contained in an application program, which is performed in the IPv6 node 21 corresponding to a client. The accept ( ) is defined as a type of int accept (int sockfd, struct sockaddr *clientaddr, int addrlen). A socket descriptor of the first socket 200 is written in a sockfd field of an accept ( ) for admitting a connection request from the IPv6 node 21 corresponding to a client, an address structure is written in a clientaddr field, the address structure including an IPv6 address and a port number of the IPv6 node 21, and a size of the address structure is written in an addrlen field.

In addition, the dual socket connecting unit 102, as a client, requests to connect to the IPv4 node 31 by calling a connect ( ), of a connect function, in the application layer 100, with the connect ( ) including information about the second socket 300 and an address of the IPv4 node 31 waiting to receive a connection request. The connect ( ) is defined as a type of int connect (int sockfd, struct sockaddr *serveraddr, int addrlen). A socket descriptor of the second socket is written in a sockfd field of the connect ( ) for requesting to connect to the IPv4 node 31, acting as a server, an address structure is written in a serveraddr, the address structure including an IPv4 address and a port number of the IPv4 node 31, and a size of the address structure is written in an addrlen field.

The first socket communicating unit 103 receives data transferred from the IPv6 node 21 through the first socket 200, generated in the dual socket generating unit 101, when the node 11 uses UDP, or receives data transferred from the IPv6 node 21 through the first socket 200 connected in the dual socket connecting unit when the node 11 uses TCP. This is because that a listen ( ) and an accept ( ) should be called in case of connection oriented communication such as TCP but data can be received and transmitted directly without calling a listen ( ) and an accept ( ) in case of non-connection oriented communication such as UDP.

More particularly, the first socket communicating unit 103, as a server, receives data transferred from the IPv6 node 21 through the first socket 200 by calling a recv ( ) or a recvfrom ( ), of a receive function, in the application layer 100, with the receive function including information about the first socket 200 and the data transferred from the IPv6 node 21. The second socket communicating unit 104, as a client, sends data transferred from the IPv6 node 21 through the second socket 300 by calling a send ( ) or a sendto ( ), of a send function, in the application layer 100, with the send function including information about the second socket 300 and the data transferred from the IPv6 node 21. A recv ( ) and send ( ) are called in connection oriented communication such as TCP, or a recvfrom ( ) and a sendto ( ) are called in non-connection oriented communication such as UDP.

The recv ( ) is defined as a type of int recv (int sockfd, char buf, int buflen, int flags). A socket descriptor of the first socket 200 is written in a sockfd field of the recv ( ) for receiving data transferred from the IPv6 node 21 through the first socket 200, with the pointer of a buffer storing the received data in a buf field, a size of the buffer being written in a buflen field, and a value indicating out of band, etc., is written in a flags field. On the other hand, the recvfrom ( ) is defined as a type of int recvfrom (int sockfd, char buf, int buflen, int flags, struct sockaddr *fromaddr, int addrlen). That is, the value identical with the recv ( ) is written in a sockfd field, a buf field, a buflen field, and a flags field of the recvfrom ( ) for receiving data through the first socket 200, a source address structure is written in a fromaddr field, with the source address structure including an IPv6 address and a port number of the IPv6 node 21 and a size of the source address structure being written in an addrlen field.

The send ( ) is defined as a type of int send (int sockfd, char buf, int buflen, int flags). A socket descriptor of the second socket 300 is written in a sockfd field of the send ( ) for transmitting data transferred from the IPv6 node 21 through the second socket 300; the pointer of the buffer that stores data to be sent is written in a buf field, the pointer being identical with the value of the recv ( ); and value indicating out of band etc. is written in a flags field, the value being identical with the value of the recv ( ). This process is applicable to the IPv6 to IPv4 transition process in the application layer 100. On the other side, the sendto ( ) is defined as a type of int sendto (int sockfd, char buf, int buflen, int flags, struct sockaddr *toaddr, int addrlen). That is, the valued identical with the send ( ) is written in a sockfd field, a buf field, a buflen field and a flags field of the sendto ( ) for transmitting data transferred from the IPv6 node 21 through the second socket 300, a source address structure is written in a toaddr field, the source address structure including an IPv4 address and a port number of the IPv4 node 31, and a size of the address structure is written in an addrlen field.

Further, the second socket communicating unit 104 receives data transferred from the IPv4 node 31 through the second socket 300, generated in the dual socket generating unit 101, when the node 11 uses UDP, or receives data transferred from the IPv4 node 31 through the second socket 300 connected with the dual socket connecting unit 102 when the node 11 uses TCP. The first socket communicating unit 103 sends data transferred from the IPv4 node 31 through the first socket 200 generated in the dual socket generating unit 101 when the node 11 uses UDP, or sends data transferred from the IPv4 node 31 through the first socket 200 connected with the dual socket connecting unit 102.

More specifically, the second socket communicating unit 104, as a server, receives data transferred from the IPv4 node 31 through the second socket 300 by calling a recv ( ) or a recvfrom ( ) of a receive function in the application layer 100, with the receive function including information about the second socket 300 and the data transferred from the IPv4 node 31. The first socket communicating unit 103, as a client, sends data transferred from the IPv4 node 31 through the first socket 200 by calling a send ( ) or a sendto ( ) of a send function in the application layer 100, with the send function including information about the first socket and the data transferred from the IPv4 node 31.

A socket descriptor of the second socket 300 is written in a sockfd field of a recv ( ) for receiving data transferred from the IPv4 node 31 through the second socket 300; a buffer pointer storing the received data is written to in a buf field; a size of the buffer is written in a buflen field; and value indicating out of band etc. is written in a flags field. On the other hand, the values identical with the recv ( ) are written in a sockfd field, a buf field, a buflen field and a flags field of the recvfrom ( ) for receiving data transferred from the IPv4 node 31 through the second socket 300; a source address structure is written in a fromaddr field, with the source address structure including an IPv4 address and a port number of the IPv4 node 31; and a size of the address structure is written in an addrlen field.

A socket descriptor of the first socket 200 is written in a sockfd of the send ( ), for transmitting data transferred from the IPv4 node 31 through the first socket 200; a pointer of a buffer that stores data to be sent is written in a buf field, the pointer being identical with the value of the recv ( ); and a value indicating out of band, etc., is written in a flags field, the value being identical with the value of the recv ( ). This process is applicable to the IPv4 to IPv6 transition process in the application layer 100. On the other side, the value identical with the send ( ) is written in a sockfd field, a buf field, a buflen field and a flags field of a sendto ( ) for transmitting data transferred from the IPv4 node 31 through the first socket 200; a source address structure is written in a toaddr field, the source address structure including an IPv6 address and a port number of the IPv6 node 21; and a size of the address structure is written in an addrlen field.

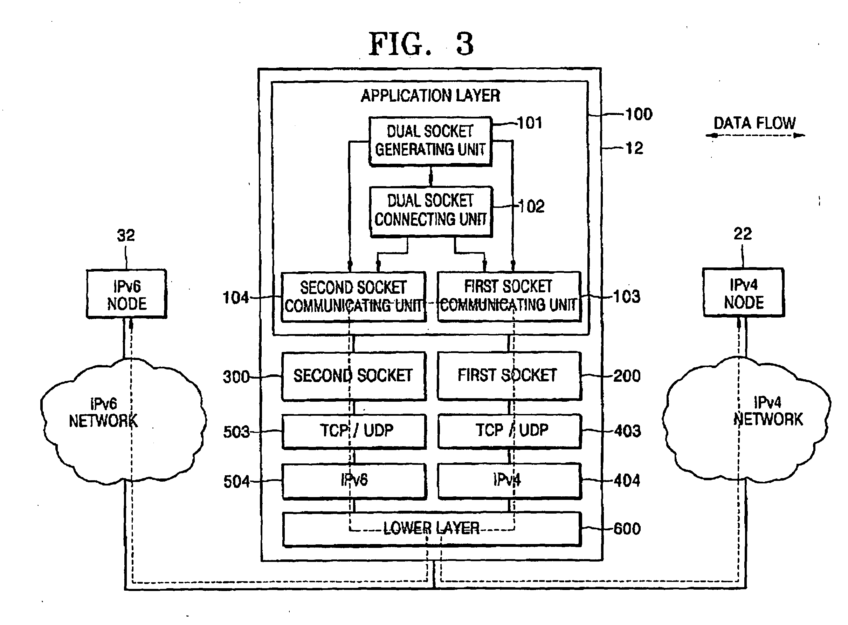

FIG. 3 is a configuration diagram of another network environment according to another exemplary embodiment of the present invention.

Referring to FIG. 3, the network environment includes a node 12 equipped with an apparatus for connecting heterogeneous protocol nodes, an IPv4 node 22, acting as a client, and the IPv6 node 32, acting as a server. The node 12 plays a role of a server, with reference to the IPv4 node 22, and concurrently also plays a role of a client, with reference to the IPv6 node 32. Embodiments of the present invention now will be described more specifically focused on the differences between the network environment of FIG. 2 and the network environment of FIG. 3, omitting the similarities between the two network environments.

As illustrated in FIG. 3, the dual socket generating unit 101 generates the first socket 200 to be used for IPv4 communication of any application program and the second socket 300 to be used for IPv6 communication of the application program. The dual socket generating unit 101, as a server and client, generates the first socket 200 by calling a socket ( ) of a socket function in an application layer 100, with the socket ( ) including information about IPv4. IPv4 is written in a protocol field of the socket ( ) for generating the first socket 200 so as to indicate use of IPv4. The dual socket generating unit 101 generates the second socket 300 by calling a socket ( ) in the application layer, with the socket ( ) including information about IPv6. IPv6 is written in a protocol field of the socket ( ) for generating the second socket 300 so as to indicate use of IPv6. Moreover, the dual socket generating unit 101, as a server, connects an address of the node 12 with the first socket 200 by calling a bind ( ), of a connect function, in the application layer 100, the connect function including information about the first socket 200 and an address of the node 12 set as the destination of the IPv4 node 22. An address structure is written in a myaddr field of the bind ( ) for connecting the address with the first socket 200, the address structure including an IPv4 address and a port number supplied by TCP/UDP 403 and IPv4 404.

The dual socket connecting unit 102, as a server, admits the received connection request by calling an accept ( ), of an accept function, in the application layer 100, with the accept function including information about the first socket 200 and the address of the IPv4 node 22 that sent the connection request. An address structure is written in a clientaddr field of the accept ( ) for admitting the connection request from the IPv4 node 22, acting as a client, the address structure including an IPv4 address and a port number of the IPv4 node 22; and a size of the address structure is written in an addrlen field.

In addition, the dual socket connecting unit 102, as a client, requests to connect to the IPv6 node 32 by calling a connect ( ), of a connect function, in the application layer 100, with the connect function including information about the second socket 300 and an address of the IPv6 node 32 waiting to receive a connection request. An address structure is written in a serveraddr of a connect ( ) for requesting to connect to the IPv6 node 32 corresponding to a server, with the address structure including an IPv6 address and a port number of the IPv6 node 32.

The first socket communicating unit 103 receives data transferred from the IPv4 node 22 through the first socket 200 generated in the dual socket generating unit 101 when the node 12 uses UDP, or receives data transferred from the IPv4 node 22 through the first socket 200 connected with the dual socket connecting unit 102 when the node 12 uses TCP. The second socket communicating unit 104 receives data transferred from the IPv4 node 22 through the second socket 300 generated in the dual socket generating unit 101 when the node 12 uses UDP, or receives data transferred from the IPv4 node 22 through the second socket 300 connected with the dual socket connecting unit 102 when the node 12 uses TCP.

The first socket communicating unit 103, as a server, receives data transferred from the IPv4 node 22 through the first socket 200 by calling a recv ( ) or a recvfrom ( ), of a receive function, in the application layer 100, with the receive function including information about the first socket 200 and the data transferred from the IPv4 node 22. The second socket communicating unit 104, as a client, sends data transferred from the IPv4 node 22 through the second socket 300 by calling a send ( ) or a sendto ( ), of a send function, in the application layer 100, with the send function including information about the second socket and the data transferred from the IPv4 node 22.

A source address structure is written in a fromaddr field of the recvfrom for receiving data, with the source address structure including an IPv4 address and a port number of the IPv4 node 22, and a size of the source address structure is written in an addrlen field.

A socket descriptor of the second socket 300 is written in a sockfd field of the send ( ) for transmitting data transferred from the IPv4 node 22 through the second socket 300; a pointer of a buffer that stores data to be sent is written in a buf field, the pointer being identical with the value of the recv ( ); a size of the buffer is written in a buflen field, the size being identical with the value of the recv ( ); and value indicating out of band, etc., is written in a flags field, the value being identical with the value of the recv ( ). This process is applicable to the IPv4 to IPv6 transition process in the application layer 100. On the other side, a source address structure is written in a toaddr field of a toaddr field for transmitting data transferred from the IPv4 node 22 through the second socket 300, the source address structure including an IPv6 address and a port number of the IPv6 node 32.

Further, the second socket communicating unit 104 receives data transferred from the IPv6 node 32 through the second socket 300, generated in the dual socket generating unit 101, when the node 12 uses UDP, or receives data transferred from the IPv4 node 22 through the second socket 300 connected with the dual socket connecting unit 102 when the node 12 uses TCP. The first socket communicating unit 103 sends data transferred from the IPv6 node 32 through the first socket 200, generated in the dual socket generating unit 101, when the node 12 uses UDP, or sends data transferred from the IPv6 node 32 through the first socket 200 connected with the dual socket connecting unit 102 when the node 12 uses TCP.

The second socket communicating unit 104, as a server, receives data transferred from the IPv6 node 32 through the second socket 300 by calling a recv ( ) or a recvfrom ( ), of a receive function, in the application layer 100, with the receive function including information about the second socket 300 and the data transferred from the IPv6 node 32. The first socket communicating unit 103, as a client, sends data transferred from the IPv6 node 32 through the first socket 200 by calling a send ( ) or a sendto ( ), of a send function, in the application layer 100, with the send function including information about the first socket and the data transferred from the IPv6 node 32.

A source address structure is written in a fromaddr field of the recvfrom ( ) for receiving data transferred from the IPv6 node 32 through the second socket 300, with the source address structure including an IPv6 address and a port number of the IPv6 node32.

A socket descriptor of the first socket 200 is written in a sockfd field of the send ( ) for transmitting data transferred from the IPv6 node 32 through the first socket 200; a pointer of a buffer storing the data to be sent is written in a buf field, with the pointer being identical with the value of the recv ( ); a size of the buffer is written in a buflen field, with the size being identical with the value of the recv ( ); and a value indicating out of band, etc., is written in a flags field, the value being identical with the value of the recv ( ). This process is applicable to the IPv6 to IPv4 transition process in the application layer 100. On the other hand, the source address structure is written in a toaddr field of the sendto ( ) for transmitting data transferred from the IPv6 node 32 through the first socket 200, with the source address structure including an IPv4 address and a port number of the IPv4 node 22.

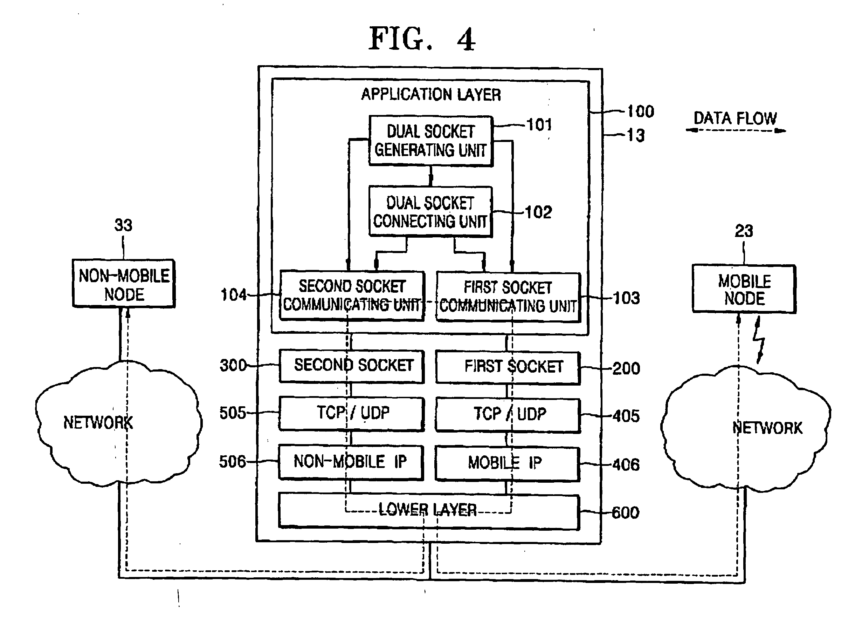

FIG. 4 is a configuration diagram of another network environment, according to still another exemplary embodiment of the present invention.

Referring to FIG. 4, the network environment includes a node 13 that is equipped with an apparatus for connecting heterogeneous protocol nodes, a mobile node 23, which acts as a client, and a non-mobile node 33, which acts as a server. The node 13 plays a role of a server with the mobile node 23, and concurrently plays the role of a client with the non-mobile node 33. Embodiments of the present invention now will be described more specifically focused on differences between the network environment of FIG. 2 and the network environment of FIG. 4, omitting the similarities between the two network environments.

The dual socket generating unit 101 generates the second socket 300 to be used for mobile communication of any application program and the second socket 300 to be used for non-mobile IP communication of the application program. The dual socket generating unit 101, as a server and client generates the first socket 200 by calling a socket ( ), of a socket function, in the application layer 100, with the socket ( ) including information about mobile IP. The mobile IP is written in a protocol field of the socket ( ) for generating the first socket 200 so as to indicate use of a mobile IP. The dual socket generating unit 101 generates the second socket 300 by calling a socket ( ) in the application layer, with the socket ( ) including information about the non-mobile IP. The non-mobile IP is written in a protocol field of the socket ( ) for generating the second socket 300 so as to indicate use of a non-mobile IP. Moreover, the dual socket generating unit 101, as a server, connects an address of the node 13 with the first socket 200 by calling a bind ( ), of a connect function, in the application layer 100, with the connect function including information about the first socket 200 and an address of the node 13 set as the destination of the mobile node 23. An address structure is written in a myaddr field of the bind ( ) for connecting the address with the first socket 200, with the address structure including a mobile IP address and a port number supplied by TCP/UDP 405 and the mobile IP 406.

The dual socket connecting unit 122, as a server, admits the received connection request by calling an accept ( ), of an accept function, in the application layer 100, with the accept function including information about the first socket 200 and the address of the mobile node 23 that sent the connection request. An address structure is written in a clientaddr field of the accept ( ) for admitting the connection request from the mobile node 23 corresponding to a client, the address structure including a mobile IP address and a port number of the mobile node 23, and a size of the address structure is written in an addrlen field.

In addition, the dual socket connecting unit 102, as a client, requests to connect to the non-mobile node 33 by calling a connect ( ), of connect function, in the application layer 100, with the connect function including information about the second socket 300 and an address of the non-mobile node 33 that waits to receive a connection request. An address structure is written in a serveraddr of a connect ( ) for requesting to connect to the non-mobile node 33 corresponding to a server, the address structure including a non-mobile IP address and a port number of the non-mobile node 33.

The first socket communicating unit 103 receives data transferred from the mobile node 23 through the first socket 200, generated in the dual socket generating unit 101, when the node 13 uses UDP, or receives data transferred from the mobile node 23 through the first socket 200 connected with the dual socket connecting unit 102 when the node 13 uses TCP. The second socket communicating unit 104 receives data transferred from the mobile node 23 through the second socket 300 generated in the dual socket generating unit 101 when the node 13 uses UDP, or receives data transferred from the mobile node 23 through the second socket 300 connected in the dual socket connecting unit 102 when the node 13 uses TCP.

The first socket communicating unit 103, as a server, receives data transferred from the mobile node 23 through the first socket 200 by calling a recv ( ) or a recvfrom ( ), of a receive function, in the application layer 100, with the receive function including information about the first socket 200 and information about the data which is transferred from the mobile node 23. The second socket communicating unit 104, as a client, sends data transferred from the mobile node 23 through the second socket 300 by calling a send ( ) or a sendto ( ), of a send function, in the application layer 100, with the send function including information about the second socket 300 and information about the data which is transferred from the mobile node 23.

A source address structure is written in a fromaddr field of the recvfrom ( ) for receiving data through the first socket 200, the source address structure including a mobile IP address and a port number of the mobile node 23; and a size of the source address structure is written in an addrlen field.

A socket descriptor of the second socket 300 is written in a sockfd field of the send ( ) for transmitting data transferred from the mobile node 23 through the second socket 300; a pointer of a buffer storing data to be sent is written in a buf field, the pointer being identical with the value of the recv ( ); and a size of the value identical with a buffer is written in a buflen field; and value indicating out of band, etc., is written in a flags field, the value being identical with the value of the recv ( ). This process is applicable to the mobile IP to non-mobile IP transition process in the application layer 100. On the other side, the source address structure is written in a toaddr field of the sendto ( ) for transmitting data transferred from the mobile node 23 through the second socket 300, with the source address structure including a non-mobile IP address and a port number of the non-mobile node 33.

Further, the second socket communicating unit 104 receives data transferred from the non-mobile node 33 through the second socket 300, generated in the dual socket generating unit 101, when the node 13 uses UDP, or receives data transferred from the non-mobile node 33 through the second socket 300 connected with the dual socket connecting unit 102 when the node 13 uses TCP. The first socket communicating unit 103 sends data transferred from the non-mobile node 33 through the first socket 200, generated in the dual socket generating unit 101, when the node 13 uses UDP, or sends data transferred from the non-mobile node 33 through the first socket 200 connected with the dual socket connecting unit 102 when the node 13 uses TCP.

The second socket communicating unit 104, as a server, receives data transferred from the non-mobile node 33 through the second socket 300 by calling a recv ( ) or a recvfrom ( ), of a receive function, in the application layer 100, with the receive function including information about the second socket 300 and information about the data which is transferred from the non-mobile node 33. The first socket communicating unit 103, as a client, sends data transferred from the non-mobile node 33 through the first socket 200 by calling a send ( ) or a sendto ( ), of a send function, in the application layer 100, with the send function including information about the first socket and information about the data which is transferred from the non-mobile node 33.

A source address structure is written in a fromaddr field of the recvfrom ( ) for transmitting data transferred from the non-mobile node 33 through the second socket 300, the source address structure including a non-mobile IP address and a port number of the non-mobile node 33.

A socket descriptor of the first socket 200 is written in a sockfd field of the send ( ) for transmitting data transferred from the non-mobile node 33 through the second socket 300; a pointer of a buffer storing data to be sent is written in a buf field, the pointer being identical with the value of the recv ( ); a size of the buffer is written in a buflen field, the size being identical with the value of the recv ( ); value indicating out of band, etc., is written in a flags field, the value being identical with the value of the recv ( ). This process is applicable to the non-mobile IP to mobile IP transition process in the application layer 100. On the other hand, a source address structure is written in a toaddr field of the sendto ( ) for transmitting data transferred from the non-mobile node 33 through the first socket 200, the source address structure including a mobile IP address and a port number of the mobile IP node 23.

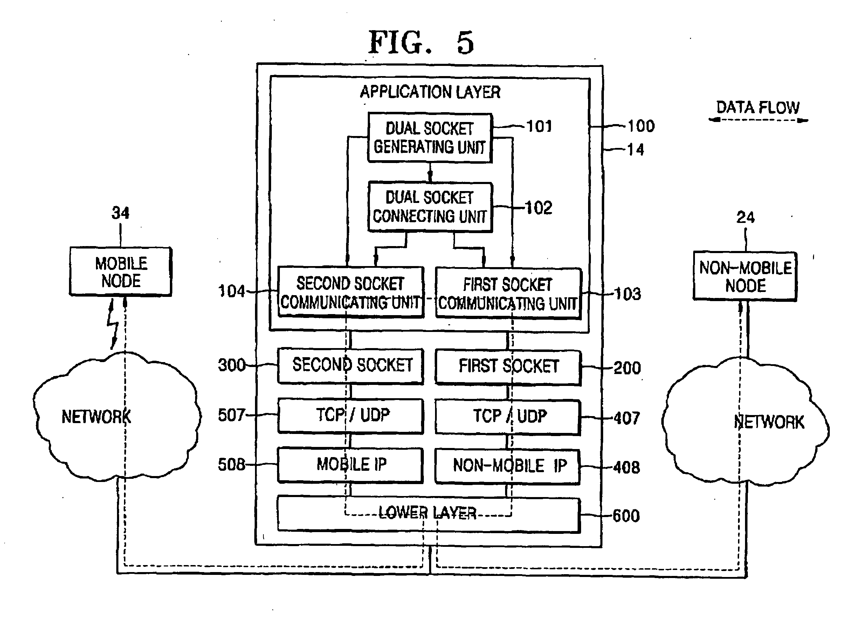

FIG. 5 is a configuration diagram of another network environment, according to yet another exemplary embodiment of the present invention.

Referring to FIG. 5, the network environment includes a node 14 which is equipped with an apparatus for connecting heterogeneous protocol nodes, a non-mobile node 24, acting as a client, and the mobile node 34, acting as a server. The node 14 plays a role of a server, with respect to the non-mobile node 24, and concurrently plays a role of a client, with respect to the mobile node 34. Embodiments of the present invention now will be described more specifically focused on differences between the network environment of FIG. 2 and the network environment of FIG. 5, omitting the similarities between the two network environments.

The dual socket generating unit 101 generates the first socket 200 to be used for non-mobile communication of any application program and the second socket 300 to be used for mobile IP communication of the application program. The dual socket generating unit 101, as a server and client, generates the first socket 200 by calling a socket ( ), of a socket function, in the application layer 100, with the socket ( ) including information about the non-mobile IP. The non-mobile IP is written in a protocol field of a socket ( ) for generating the first socket 200 so as to indicate use of mobile IP. The dual socket generating unit 101 generates the second socket 300 by calling a socket ( ) in the application layer, with the socket ( ) including information about the mobile IP. The mobile IP is written in a protocol field of the socket ( ) for generating the second socket 300 so as to indicate use of a mobile IP. Moreover, the dual socket generating unit 101, as a server, connects an address of the node 14 with the first socket 200 by calling a bind ( ), of a connect function, in the application layer 100, with the connect function including information about the first socket 200 and an address of the node 14 set as the destination of the non-mobile node 24. An address structure is written in a myaddr field of the bind ( ) for connecting the address with the first socket 200, the address structure including a non-mobile IP address and a port number supplied by TCP/UDP 407 and the non-mobile IP 408.

The dual socket connecting unit 102, as a server, admits the received connection request by calling an accept ( ), of an accept function, in the application layer 100, with the accept function including information about the first socket 200 and the address of the non-mobile node 24 that sent the connection request. An address structure is written in a clientaddr field of an accept ( ) for admitting the connection request from the non-mobile node 24, acting as a client, the address structure including a non-mobile IP address and a port number of the non-mobile node 24, and a size of the address structure is written in an addrlen field.

In addition, the dual socket connecting unit 102, as a client, requests to connect to mobile node 34 by calling a connect ( ), of a connect function, in the application layer 100, with the connect function including information about the second socket 300 and an address of the mobile node 34 that waits to receive a connection request. An address structure is written in a serveraddr of a connect ( ) for requesting to connect to the mobile node 34, acting as a server, the address structure including a mobile IP address and a port number of the mobile node 34.

The first socket communicating unit 103 receives data transferred from the non-mobile node 24 through the first socket 200, generated in the dual socket generating unit 101, when the node 14 uses UDP, or receives data transferred from the non-mobile node 24 through the first socket 200 connected with the dual socket connecting unit 102 when the node 14 uses TCP. The second socket communicating unit 104 sends data transferred from the non-mobile node 24 through the second socket 300 generated in a dual socket generating unit 101 when the node 14 uses UDP, or sends data transferred from the non-mobile node 24 through the second socket 300 connected with the dual socket connecting unit 102 when the node 14 uses TCP.

The first socket communicating unit 103, as a server, receives data transferred from the non-mobile node 24 through the first socket 200 by calling a recv ( ) or a recvfrom ( ), of a receive function, in the application layer 100, with the receive function including information about the first socket 200 and information about the data which is transferred from the non-mobile node 24. The second socket communicating unit 104, as a client, sends data transferred from the non-mobile node 24 through the second socket 300 by calling a send ( ) or a sendto ( ), of a send function, in the application layer 100, with the send function including information about the second socket 300 and information about the data which is transferred from the non-mobile node 24.

A source address structure is written in a fromaddr field of a recvfrom ( ) for receiving data through the first socket 200, the source address structure including a non-mobile IP address and a port number of the non-mobile node 24; and a size of the source address structure is written in an addrlen field.

A socket descriptor of the second socket 300 is written in a sockfd field of a send ( ) for transmitting data transferred from the non-mobile node 24 through the second socket 300; a pointer of a buffer storing data to be sent is written in a buf field, the pointer being identical with the value of a recv ( ); and a size of the buffer is written in a buflen field, the size being identical with the value of a recv ( ); and a value indicating out of band, etc., is written in a flags field, the value being identical with the value of a recv ( ). This process is applicable to the non-mobile IP to mobile IP transition process in the application layer 100. On the other side, a source address structure is written in a toaddr field of a sendto ( ) for transmitting data transferred from the non-mobile node 24 through the second socket 300, the source address structure including a mobile IP address and a port number of the mobile node 34.

Further, the second socket communicating unit 104 receives data transferred from the mobile node 34 through the second socket 300, generated in a dual socket generating unit 101, when the node 14 uses UDP, or receives data transferred from the mobile node 34 through the second socket 300 connected with the dual socket connecting unit 102 when the node 14 uses TCP. The first socket communicating unit 103 sends data transferred from the mobile node 34 through the first socket 200, generated in a dual socket generating unit 101, when the node 14 uses UDP, or sends data transferred from the mobile node 34 through the first socket 200 connected with the dual socket connecting unit 102 when the node 14 uses TCP.

The second socket communicating unit 104, as a server, receives data transferred from the mobile node 34 through the second socket 300 by calling a recv ( ) or a recvfrom ( ), of a receive function, in the application layer 100, with the receive function including information about the second socket 300 and information about the data which is transferred from the mobile node 34. The first socket communicating unit 103, as a client, sends data transferred from the mobile node 34 through the first socket 200 by calling a send ( ) or a sendto ( ), of a send function, in the application layer 100, with the send function including information about the first socket 200 and information about the data which is transferred from the mobile node 34.

A source address structure is written in a fromaddr field of a recvfrom ( ) for receiving data transferred from the mobile node 34 through the second socket 300, the source address structure including a mobile IP address and a port number of the mobile node 34.

A socket descriptor of the first socket 200 is written in a sockfd field of a send ( ) for transmitting data transferred from the mobile node 34 through the first socket 200; a pointer of a buffer storing data to be sent is written in a buf field, the pointer being identical with the value of the recv ( ); a size of the buffer is written in a buflen field, the size being identical with the value of the recv ( ); and a value indicating out of band, etc., is written in a flags field, the value being identical with the value of the recv ( ). This process is applicable to the mobile IP to non-mobile IP transition process in the application layer 100. On the other hand, a source address structure is written in a toaddr field of a sendto ( ) for transmitting data transferred from the mobile node 34 through the first socket 200, the source address structure including a non-mobile IP address and a port number of the non-mobile node 24.

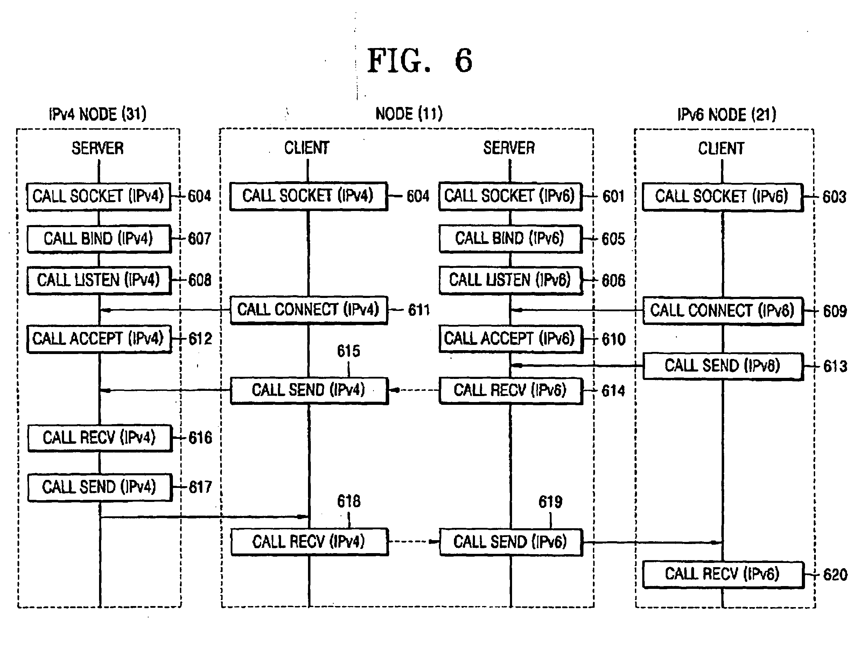

FIG. 6 is a flowchart of a method of connecting heterogeneous protocol nodes, according to an exemplary embodiment of the present invention.

Referring to FIG. 6, the method of connecting heterogeneous protocol nodes includes operations of as described below. The method of connecting heterogeneous protocol nodes can be implemented in a network environment illustrated in FIG. 2, for example.

First, the node 11, as a server and client, generates the first socket by calling a socket (IPv6) in the application layer, the socket (IPv6) including information about IPv6, and the second socket by calling a socket (IPv4) in the application layer, the socket (IPv4) including information about IPv4 (operations 601 and 602). At the same time, the IPv6 node 21 generates the third socket by calling the socket (IPv6) that includes information about IPv6, and the IPv4 node 31 generates a fourth socket by calling a socket (IPv4) that includes information about IPv4 (operations 603 and 604).

Subsequently, the node 11, as a server, connects an address of the node 11 with the first socket by calling a bind (IPv6) in the application layer, with the bind (IPv6) including information about the first socket and an address of the node 11 set as a destination by the IPv6 node 21 (operation 605). Next, the node 11, as a server, waits to receive a connection request of which destination is an address connected with the first socket by calling a listen (IPv6) in the application layer, with the listen (IPv6) including information about the first socket (operation 606). Simultaneously, the IPv4 node 31, as a server, connects an address of the IPv4 node with the fourth socket by calling a bind (IPv4) in the application layer, with the bind (IPv4) including information about the fourth socket (operation 607). Then the IPv4 node 31, as a server, waits to receive a connection request of which destination is an address connected with the fourth socket by calling a listen (IPv4) in the application layer, with the listen (IPv4) including information the fourth socket (operation 608).

Thereafter, the IPv6 node 21, as a client, requests to connect to the node 11 by calling a connect (IPv6) in the application layer, with the connect (IPv6) including information about the third socket and an address of the node 11 that waits to receive a connection request (operation 609). Next, the node 11, as a server, admits the connection request by calling an accept (IPv6) in the application layer, with the accept (IPv6) including information about the first socket, and an address of the IPv6 node 21 that sent the connection request (operation 610). At the same time, the node 11, as a client, requests to connect to the IPv4 node 31 by calling a connect (IPv4) in the application layer, with the connect (IPv4) including information about the second socket and an address of the IPv4 node 31 that waits to receive a connection request (operation 611). Then the IPv4 node 31 admits the received connection request by calling an accept (IPv4) in the application layer, with the accept (IPv4) including information the fourth socket and an address of the node 11 that sent the connection request (operation 612). In case of a non-mobile communication such as UDP, the operations of calling a listen ( ), a connect ( ), and an accept ( ) can be omitted.

Next, the IPv6 node 21, as a client, transmits data (from the IPv6 node 21) through the third socket by calling a send (IPv6) in the application layer, with the send (IPv6) including information about the third socket and information about data transferred from the IPv6 node 21 (operation 613). Subsequently, the node 11, as a server, receives data transferred from the IPv6 node 21 through the first socket by calling a recv (IPv6) in the application layer, with the recv (IPv6) including information about the first socket and data transferred from the IPv6 node 21 (operation 614). Thereafter the node 11 transmits data transferred from the IPv6 node 21 through the second socket by calling a send (IPv4) in the application layer, with the data including information about the second socket and data transferred from the IPv6 node 21 (operation 615). This process is applicable to the IPv6 to IPv4 transition process in the application layer. Next, the IPv4 node 31, as a server, receives data transferred from the IPv6 node 21 through the fourth socket by calling a recv (IPv4) in the application layer, with the recv (IPv4) including information the fourth socket and the data transferred from the IPv6 node 21 (operation 616). The IPv4 node 31 processes the data transferred from the IPv6 node 21.

Subsequently, the IPv4 node 31, as a server, transmits data transferred from the IPv4 node 31 through the fourth socket by calling a send (IPv4) in the application layer, with the send (IPv4) including information about the fourth socket and the data transferred from the IPv4 node 31 (operation 617). Then, the node 11, as a client, receives the data transferred from the IPv4 node 31 through the second socket by calling a recv (IPv4) in the application layer, with the recv (IPv4) including information about the second socket and the data transferred from the IPv4 node 31 (operation 618). Thereafter, the node 11, as a server, transmits the data transferred from the IPv4 node 31 through the first socket by calling a send (IPv6) in the application layer, with the send (IPv6) including information about the first socket and the data transferred from the IPv4 node 31 (operation 619). This process is applicable to the IPv4 to IPv6 transition process in the application layer. Next, the IPv6 node 21, as a client, receives data transferred from the IPv4 node 31 through the third socket by calling a recv (IPv6) in the application layer, with the recv (IPv6) including information about the fourth socket and the data transferred from the IPv4 node 31 (operation 620). The IPv6 node 21 processes the data transferred from the IPv4 node 31. In case of a non-mobile communication such as UDP, a sendto ( ) and a recvfrom ( ) are called instead of the send ( ) and the recv ( ), respectively.

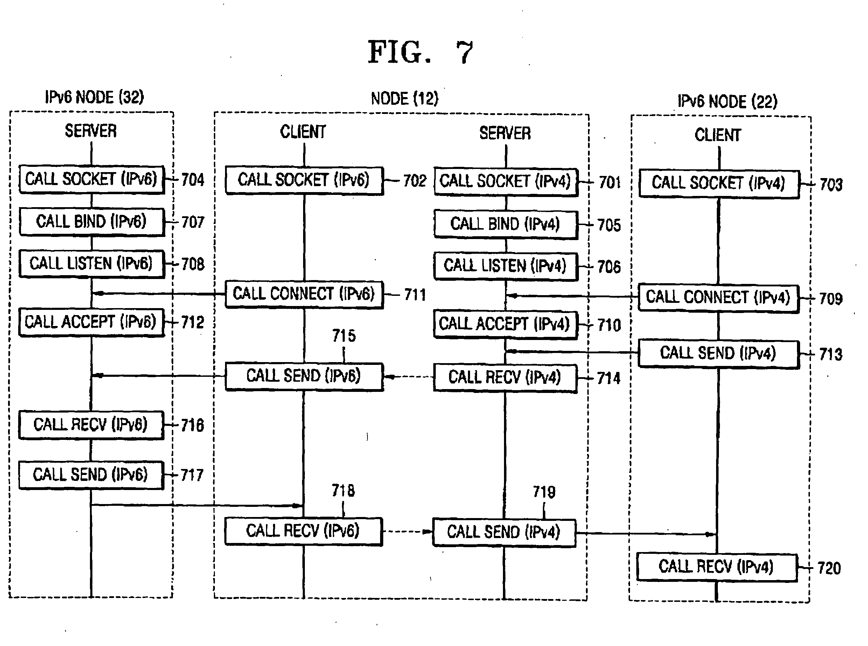

FIG. 7 is a flowchart of another method of connecting heterogeneous protocol nodes according to another exemplary embodiment of the present invention.

Referring to FIG. 7, the method of connecting heterogeneous protocol nodes includes operations of as described below. This method of connecting heterogeneous protocol nodes can be implemented in the network environment illustrated in FIG. 3. for example.

First, the node 12, as a server and client, generates the first socket by calling a socket (IPv4) in the application layer, the socket (IPv4) including information about Ipv4, and the second socket by calling a socket (IPv6) in the application layer, the socket (IPv6) including information about IPv6 (operations 701 and 702). At the same time, the IPv4 node 22 generates the third socket by calling a socket (IPv4) that includes information about IPv4, and the IPv6 node 32 generates the fourth socket by calling a socket (IPv6) that includes information about IPv6 (operations 703 and 704).

Subsequently, the node 12, as a server, connects an address of the node 12 with the first socket by calling a bind (IPv4) in the application layer, with the bind (IPv4) including information about the first socket and an address of the node 12 set as a destination by the IPv4 node 22 (operation 705). Next, the node 12, as a server, waits to receive a connection request of which destination is an address connected with the first socket by calling a listen (IPv4) in the application layer, with the listen (IPv4) including information about the first socket (operation 706). Simultaneously, the IPv6 node 32, as a server, connects an address of the IPv6 node 32 with the fourth socket by calling a bind (IPv6) in the application layer, with the bind (IPv6) including information about the fourth socket and an address of the node 12 set as a destination by the IPv6 node 32 (operation 707). Then the IPv6 node 32, as a server, waits to receive a connection request of which destination is an address connected with the fourth socket by calling a listen (IPv6) in the application layer, with the listen (IPv6) including information the fourth socket (operation 708).

Thereafter, the IPv4 node 22, as a client, requests to connect to the node 12 by calling a connect (IPv4) in the application layer, with the connect (IPv4) including information about the third socket and an address of the node 12 that waits to receive a connection request (operation 709). Next, the node 12, as a server, admits the connection request by calling an accept (IPv4) in the application layer, with the accept (IPv4) including information about the first socket, and an address of the IPv4 node 22 that sent the connection request (operation 710). At the same time, the node 12, as a client, requests to connect to the IPv6 node 32 by calling a connect (IPv6) in the application layer, with the connect (IPv6) including information about the second socket and an address of the IPv6 node 32 that waits to receive a connection request (operation 711). Then the IPv6 node 32 admits the received connection request by calling an accept (IPv6) in the application layer, the accept (IPv6) including information of the fourth socket and an address of the node 12 that sent the connection request (operation 712). In case of a non-mobile communication such as UDP, the operations of calling a listen ( ), a connect ( ), and an accept ( ) are omitted.

Next, the IPv4 node 22, as a client, transmits data transferred from the IPv4 node 22 through the third socket by calling a send (IPv4) in the application layer, with the send (IPv4) including information about the third socket and the data transferred from the IPv4 node 22 (operation 713). Subsequently, the node 12, as a server, receives data transferred from the IPv4 node 22 through the first socket by calling a recv (IPv4) in the application layer, with the recv (IPv4) including information about the first socket and data transferred from the IPv4 node 22 (operation 714). Thereafter the node 12 transmits data transferred from the IPv4 node 22 through the second socket by calling a send (IPv6) in the application layer, the data including information about the second socket and data transferred from the IPv4 node 22 (operation 715). This process is applicable to the IPv4 to IPv6 transition process in the application layer. Next, the IPv6 node 32, as a server, receives data transferred from the IPv4 node 22 through the fourth socket by calling a recv (IPv6) in the application layer, with the recv (IPv6) including information the fourth socket and the data transferred from the IPv4 node 22 (operation 716). The IPv6 node 32 processes the data transferred from the IPv4 node 22.

Subsequently, the IPv6 node 32, as a server, transmits data transferred from the IPv6 node 32 through the fourth socket by calling a send (IPv6) in the application layer, with the send (IPv6) including information about the fourth socket and the data transferred from the IPv6 node 32 (operation 717). Then, the node 12, as a client, receives the data transferred from the IPv6 node 32 through the second socket by calling a recv (IPv6) in the application layer, with the recv (IPv6) including information about the second socket and the data transferred from the IPv6 node 32 (operation 718). Thereafter, the node 12, as a server, transmits the data transferred from the IPv6 node 32 through the first socket by calling a send (IPv4) in the application layer, with the send (IPv4) including information about the first socket and the data transferred from the IPv6 node 32 (operation 719). This process is applicable to the IPv6 to IPv4 transition process in the application layer. Next, the IPv4 node 22, as a client, receives data transferred from the IPv6 node 32 through the third socket by calling a recv (IPv4) in the application layer, with the recv (IPv4) including information about the fourth socket and the data transferred from the IPv6 node 32 (operation 720). The IPv4 node 22 processes the data transferred from the IPv6 node 32. In case of a non-mobile communication such as UDP, a sendto ( ) and a recvfrom ( ) are called instead of the send ( ) and the recv ( ), respectively.

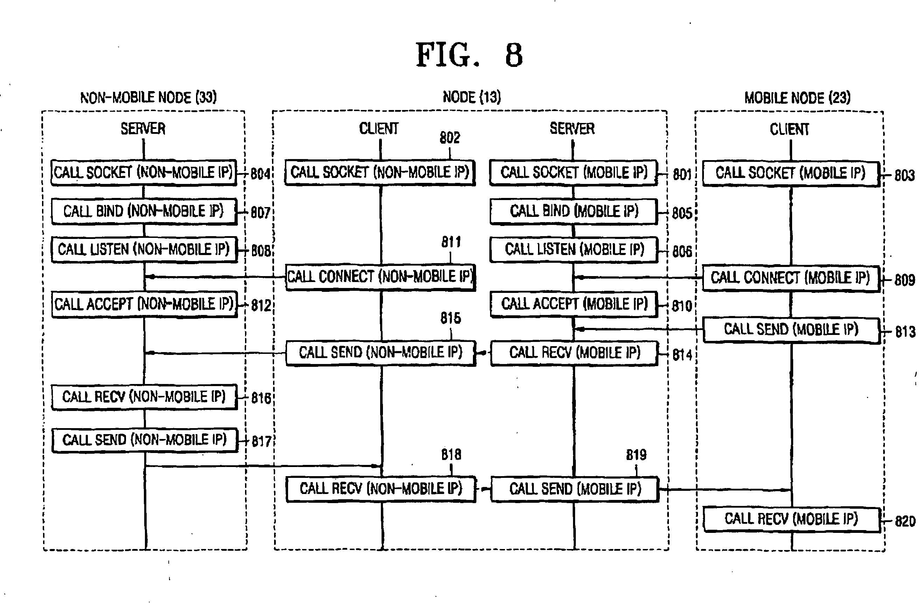

FIG. 8 is a flowchart of another method of connecting heterogeneous protocol nodes according to still another exemplary embodiment of the present invention.

Referring to FIG. 8, the method of connecting heterogeneous protocol nodes includes operations of as described below. The method of connecting heterogeneous protocol nodes can be implemented in the network environment illustrated in FIG. 4, for example.

First, the node 13, as a server and client, generates the first socket by calling a socket (mobile IP) in the application layer, the socket (mobile IP) including information about the mobile IP, and the second socket by calling a socket (non-mobile IP) in the application layer, the socket (non-mobile IP) including information about the non-mobile IP (operations 801 and 802). At the same time, the mobile node 23 generates the third socket by calling a socket (mobile IP) that includes information about the mobile IP, and the non-mobile node 33 generates the fourth socket by calling a socket (non-mobile IP) that includes information about the non-mobile IP (operations 803 and 804).

Subsequently, the node 13, as a server, connects an address of the node 13 with the first socket by calling a bind (mobile IP) in the application layer, with the bind (mobile IP) including information about the first socket and an address of the node 13 set as a destination by the mobile node 23 (operation 805). Next, the node 13, as a server, waits to receive a connection request of which destination is an address connected with the first socket by calling a listen (mobile IP) in the application layer, with the listen (mobile IP) including information about the first socket (operation 806). Simultaneously, the non-mobile node 33, as a server, connects an address of the non-mobile IP node 33 with the fourth socket by calling a bind (non-mobile IP) in the application layer, with the bind (non-mobile IP) including information about the fourth socket and an address of the non-mobile node 33 set as a destination by the node 13 (operation 807). Then the non-mobile node 33, as a server, waits to receive a connection request of which destination is an address connected with the fourth socket by calling a listen (non-mobile IP) in the application layer, with the listen (non-mobile IP) including information the fourth socket (operation 808).

Thereafter, the mobile node 23, as a client, requests to connect to the node 13 by calling a connect (mobile IP) in the application layer, with the connect (mobile IP) including information about the third socket and an address of the node 13 that waits to receive a connection request (operation 809). Next, the node 13, as a server, admits the connection request by calling an accept (mobile IP) in the application layer, with the accept (mobile IP) including information about the first socket, and an address of the mobile node 23 that sent the connection request (operation 810). At the same time, the node 13, as a client, requests to connect to the non-mobile node 33 by calling a connect (non-mobile IP) in the application layer, with the connect (non-mobile IP) including information about the second socket and an address of the non-mobile node 33 that waits to receive a connection request (operation 811). Then the non-mobile node 33 admits the received connection request by calling an accept (non-mobile IP) in the application layer, the accept (non-mobile IP) including information the fourth socket, and an address of the node 13 that sent the connection request (operation 812). In case of a non-mobile communication such as UDP, the operations of calling a listen ( ), a connect ( ), and an accept ( ) can be omitted.

Next, the mobile node 23, as a client, transmits data transferred from the mobile node 23 through the third socket by calling a send (mobile IP) in the application layer, with the send (mobile IP) including information about the third socket and information about data transferred from the mobile node 23 (operation 813). Subsequently, the node 13, as a server, receives data transferred from the mobile node 23 through the first socket by calling a recv (mobile IP) in the application layer, with the recv (mobile IP) including information about the first socket and data transferred from the mobile node 23 (operation 814). Thereafter the node 13 transmits data transferred from the mobile node 23 through the second socket by calling a send (non-mobile IP) in the application layer, the data including information about the second socket and data transferred from the mobile node 23 (operation 815). This process is applicable to the mobile IP to non-mobile IP transition process in the application layer. Next, the non-mobile node 33, as a server, receives data transferred from the mobile node 23 through the fourth socket by calling a recv (non-mobile IP) in the application layer, with the recv (non-mobile IP) including information the fourth socket and the data transferred from the mobile node 23 (operation 816). The non-mobile node 33 processes the data transferred from the mobile node 23.

Subsequently, the non-mobile node 33, as a server, transmits data transferred from the non-mobile node 33 through the fourth socket by calling a send (non-mobile IP) in the application layer, with the send (non-mobile IP) including information about the fourth socket and the data transferred from the non-mobile node 33 (operation 817). Then, the node 13, as a client, receives the data transferred from the non-mobile node 33 through the second socket by calling a recv (non-mobile IP) in the application layer, with the recv (non-mobile IP) including information about the second socket and the data transferred from the non-mobile node 33 (operation 818). Thereafter, the node 13, as a server, transmits the data transferred from the non-mobile node 33 through the first socket by calling a send (mobile IP) in the application layer, with the send (mobile IP) including information about the first socket and the data transferred from the non-mobile node 33 (operation 819). This process is applicable to the non-mobile IP to mobile IP transition process in the application layer. Next, the mobile node 23, as a client, receives data transferred from the non-mobile node 33 through the third socket by calling a recv (mobile IP) in the application layer, with the recv (mobile IP) including information about the fourth socket and the data transferred from the non-mobile IP 31 (operation 820). The mobile node 23 processes the data transferred from the non-mobile node 33. In case of a non-mobile communication such as UDP, a sendto ( ) and a recvfrom ( ) are called instead of the send ( ) and the recv ( ), respectively.

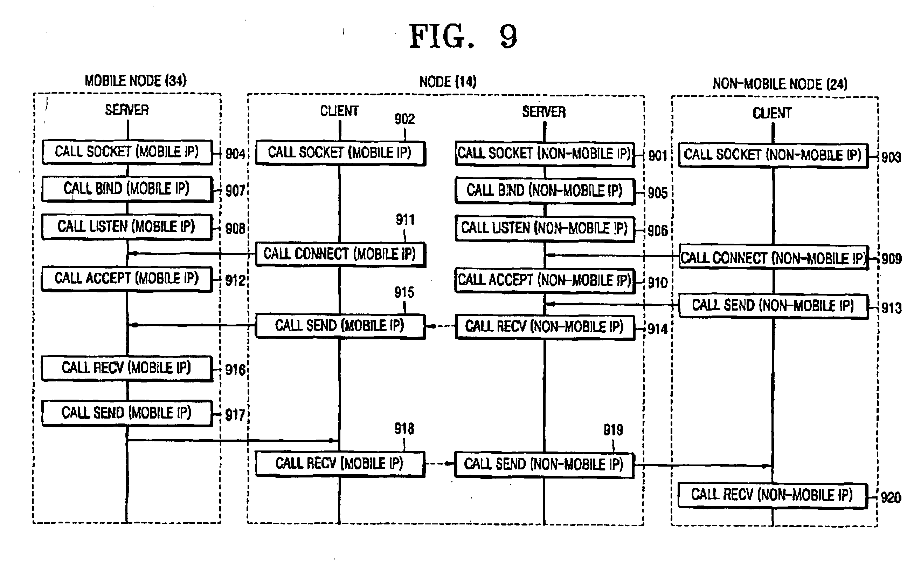

FIG. 9 is a flowchart of another method of connecting heterogeneous protocol nodes according to yet another exemplary embodiment of the present invention.

Referring to FIG. 9, the method of connecting heterogeneous protocol nodes includes operations of as described below. The method of connecting heterogeneous protocol nodes is implemented in the network environment illustrated in FIG. 5, for example.

First, the node 14, as a server and client, generates the first socket by calling a socket (non-mobile IP) in the application layer, the socket (non-mobile IP) including information about the non-mobile IP, and the second socket by calling a socket (mobile IP) in the application layer, the socket (mobile IP) including information about the mobile IP (operations 901 and 902). At the same time, the non-mobile node 24 generates the third socket by calling a socket (non-mobile IP) that includes information about the non-mobile IP, and the mobile node 34 generates the fourth socket by calling a socket (mobile IP) that includes information about the mobile IP (operations 903 and 904).

Subsequently, the node 14, as a server, connects an address of the node 14 with the first socket by calling a bind (non-mobile IP) in the application layer, with the bind (non-mobile IP) including information about the first socket and an address of the node 14 set as a destination by the non-mobile node 24 (operation 905). Next, the node 14, as a server, waits to receive a connection request of which destination is an address connected with the first socket by calling a listen (non-mobile IP) in the application layer, with the listen (non-mobile IP) including information about the first socket (operation 906). Simultaneously, the mobile node 34, as a server, connects an address of the mobile IP node 34 with the fourth socket by calling a bind (mobile IP) in the application layer, with the bind (mobile IP) including information about the fourth socket (operation 907). Then the mobile node 34, as a server, waits to receive a connection request of which destination is an address connected with the fourth socket by calling a listen (mobile IP) in the application layer, with the listen (mobile IP) including information the fourth socket (operation 908).

Thereafter, the non-mobile node 24, as a client, requests to connect to the node 14 by calling a connect (non-mobile IP) in the application layer, with the connect (non-mobile IP) including information about the third socket and an address of the node 14 that waits to receive a connection request (operation 909). Next, the node 14, as a server, admits the connection request by calling an accept (non-mobile IP) in the application layer, with the accept (non-mobile IP) including information about the first socket, and an address of the non-mobile node 24 that sent the connection request (operation 910). At the same time, the node 14, as a client, requests to connect to the mobile node 34 by calling a connect (mobile IP) in the application layer, with the connect (mobile IP) including information about the second socket and an address of the mobile node 34 that waits to receive a connection request (operation 911). Then the mobile node 34 admits the received connection request by calling an accept (mobile IP) in the application layer, the accept (mobile IP) including information the fourth socket an address of the node 14 that sent the connection request (operation 912). In case of a non-mobile communication such as UDP, the operations of calling a listen ( ), a connect ( ), and an accept ( ) are omitted.

Next, the non-mobile node 24, as a client, transmits data transferred from the non-mobile node 24 through the third socket by calling a send (non-mobile IP) in the application layer, with the send (non-mobile IP) including information about the third socket and information about data transferred from the non-mobile node 24 (operation 913). Subsequently, the node 14, as a server, receives data transferred from the non-mobile node 24 through the first socket by calling a recv (non-mobile IP) in the application layer, with the recv (non-mobile IP) including information about the first socket and data transferred from the non-mobile node 24 (operation 914). Thereafter the node 14 transmits data transferred from the non-mobile node 24 through the second socket by calling a send (mobile IP) in the application layer, the data including information about the second socket and data transferred from the non-mobile node 24 (operation 915). This process is applicable to the non-mobile IP to mobile IP transition process in the application layer. Next, the mobile node 34, as a server, receives data transferred from the non-mobile node 24 through the fourth socket by calling a recv (mobile IP) in the application layer, with the recv (mobile IP) including information the fourth socket and the data transferred from the non-mobile node 24 (operation 916). The mobile node 34 processes the data transferred from the non-mobile node 24.

Subsequently, the mobile node 34, as a server, transmits data transferred from the mobile node 34 through the fourth socket by calling a send (mobile IP) in the application layer, with the send (mobile IP) including information about the fourth socket and the data transferred from the mobile node 34 (operation 917). Then, the node 14, as a client, receives the data transferred from the mobile node 34 through the second socket by calling a recv (mobile IP) in the application layer, with the recv (mobile IP) including information about the second socket and the data transferred from the mobile node 34 (operation 918). Thereafter, the node 14, as a server, transmits the data transferred from the mobile node 34 through the first socket by calling a send (non-mobile IP) in the application layer, with the send (non-mobile IP) including information about the first socket and the data transferred from the mobile node 34 (operation 919). This process is applicable to the mobile IP to non-mobile IP transition process in the application layer. Next, the non-mobile node 24, as a client, receives data transferred from the mobile node 34 through the third socket by calling a recv (non-mobile IP) in the application layer, with the recv (non-mobile IP) including information about the fourth socket and the data transferred from the mobile IP 31 (operation 920). The non-mobile node 24 processes the data transferred from the mobile node 34. In case of a non-mobile communication such as UDP, a sendto ( ) and a recvfrom ( ) are called instead of the send ( ) and the recv ( ), respectively.

Embodiments of the present invention can be implemented through computer readable code and can be implemented in general-use digital computers that execute the computer readable code using a medium, e.g., computer readable recording media. Examples of the media include magnetic storage media (e.g., ROM, floppy disks, hard disks, etc.), optical recording media (e.g., CD-ROMs, or DVDs), and storage media such as carrier waves (e.g., transmission through the Internet), for example.

According to embodiments of the present invention, it is possible to connect nodes using heterogeneous protocol with each other. For example, an IPv4 node can be connected with an IPv6 node, and a non-mobile node can be connected with a mobile node. Especially, users or terminal distributors can easily carry out the present invention since the present invention is possible to be performed in the application layer that the users or the terminal distributors can manage.

Although a few preferred embodiments have been shown and described, it will be appreciated by those skilled in the art that various changes and modifications might be made without departing from the scope of the invention, as defined in the appended claims.

The described embodiments should be considered in descriptive sense only and not for purposes of limitation. Therefore, the scope of the invention is defined not by the detailed description of the invention but by the appended claims, and all differences within the scope will be construed as being included in the present invention.

## Claims

1. A method of connecting heterogeneous protocol nodes (1,2,3), the method comprising:
receiving first data at a node (1) transferred from a first node (2), which uses a first protocol (400), through a first socket (200) in the node (1); and
transmitting the received first data to a second node (3), which uses a second protocol (500), through a second socket (300) in the node (1); wherein
in the receiving of the first data transferred from the first node (2), the first data is received through the first socket (200) by calling a receive function in an application layer (100) of the node (1), with the receive function including information about the first socket (200) and the first data, and
in the transmitting of the received first data from the node (1) to the second node (3), the received first data is transmitted through the second socket (300) by calling a send function in the application layer (100), with the send function including information about the second socket (300) and the information about the first data.

2. The method of claim 1, wherein the first protocol (400) is IPv6 and the second protocol (500) is IPv4, or the second protocol (500) is IPv6 and the first protocol (400) is IPv4.

3. The method of either claim 1 or claim 2, further comprising generating the first socket (200) and the second socket (300) to be used in communication based on the first protocol (400) and the second protocol (500), respectively; and
connecting the generated first socket (200) to the first node (2) and connecting the generated second socket (300) to the second node (3),
wherein in the receiving of the first data transferred from the first node (2), the first data is received through the first socket (200) connected in the generating of the first and second sockets (200,300), and
in the transmitting of the received first data to the second node (3), the received first data is transmitted through the second socket (300) connected in the generating of the first and second sockets (200,300).

4. The method of any one of claims 1 to 3, wherein in the generating of the first and second sockets (200,300), the first socket (200) and the second socket (300), which are application program interfaces, are generated by calling predetermined functions in an application layer (100).

5. The method of any one of the preceding claims, wherein in the communicating, communication is performed through the first socket (200) and the second socket (300), which are application program interfaces, by calling predetermined functions in an application layer (100).

6. An apparatus for connecting heterogeneous protocol nodes (1,2,3), the apparatus comprising:
a first socket communicating unit (103) in a node (1) for receiving first data through a first socket (200), the first data transferred from a first node (2) using a first protocol (400); and
a second socket communicating unit (104) in the node (1) for transmitting the first data received by the first socket communicating unit (103) to a second node (3) through a second socket (300), wherein
the first socket communicating unit (103) is operable to receive data through the first socket (200) by calling a receive function in an application layer (100) in the node (1) with the receive function including information about the first socket (200) and the received data, and
the second socket communicating unit (104) is operable to transmit the received data through the second socket (300) by calling a send function in the application layer (100), with the send function including information about the second socket (300) and the information about the received data.

7. The apparatus of claim 6, wherein the first protocol (400) is IPv6 and the second protocol (500) is IPv4, or the second protocol (500) is IPv6 and the first protocol (400) is IPv4.

8. The apparatus of claim 6 or claim 7 further comprising a dual socket generating unit (101) for generating the first socket (200) and second socket (300) to be used in the first protocol (400) based communication and the second protocol (500) based communication, respectively; and
a dual socket connecting unit (102) for connecting the first socket (200) with the first node (2) and the second socket (300) with the second node (3), with the first and second sockets (200,300) being generated by the dual socket generating unit (101),
wherein the first socket communicating unit (103) is operable to receive data through the first socket (200), connected by the dual socket connecting unit (102), and the second socket communicating unit (104) is operable to send data through the second socket (300), connected by the dual socket connecting unit (102).

9. A medium comprising computer readable code, which when executed, implements the connection of heterogeneous protocol nodes (1,2,3), comprising:
receiving first data at a node (1) transferred from a first node (2), which uses a first protocol (400), through a first socket (200) of the node (1); and
transmitting the received first data from the node (1) to a second node (3), which uses a second protocol (500), through a second socket (300) of the node (1); wherein
in the receiving of the first data transferred from the first node (2), the first data is received through the first socket (200) by calling a receive function in an application layer (100), with the receive function including information about the first socket (200) and the first data, and
in the transmitting of the received first data to the second node (3), the received first data is transmitted through the second socket (300) by calling a send function in the application layer (100), with the send function including information about the second socket (300) and the information about the first data.

## Patentansprüche

1. Verfahren zum Verbinden von Knoten (1, 2, 3) heterogener Protokolle, wobei das Verfahren umfasst:
Empfangen erster Daten an einem Knoten (1), die von einem ersten Knoten (2) übertragen werden, der ein erstes Protokoll (400) verwendet, über ein erstes Socket (200) in dem Knoten (1); und
Senden der empfangenen ersten Daten zu einem zweiten Knoten (3), der ein zweites Protokoll (500) verwendet, über ein zweites Socket (300) in dem Knoten (1); wobei
beim Empfangen der von dem ersten Knoten (2) übertragenen ersten Daten die ersten Daten über das erste Socket (200) empfangen werden, indem eine Empfangsfunktion in einer Anwendungsschicht (100) des Knotens (1) aufgerufen wird, und die Empfangsfunktion Informationen über das erste Socket (200) und die ersten Daten enthält, und
beim Senden der empfangenen ersten Daten von dem Knoten (1) zu dem zweiten Knoten (3) die empfangenen ersten Daten über das zweite Socket (300) gesendet werden, indem eine Sendefunktion in der Anwendungsschicht (100) aufgerufen wird, und die Sendefunktion Informationen über das zweite Socket (300) und die Informationen über die ersten Daten enthält.

2. Verfahren nach Anspruch 1, wobei das erste Protokoll (400) IPv6 ist und das zweite Protokoll (500) IPv4 ist oder das zweite Protokoll (500) IPv6 ist und das erste Protokoll (400) IPv4 ist.

3. Verfahren nach Anspruch 1 oder Anspruch 2, das des Weiteren Erzeugen des ersten Socket (200) und des zweiten Socket (300) umfasst, die bei Kommunikation auf Basis des ersten Protokolls (400) bzw. des zweiten Protokolls (500) zu verwenden sind; und
Verbinden des erzeugten ersten Socket (200) mit dem ersten Knoten (2) und Verbinden des erzeugten zweiten Socket (300) mit dem zweiten Knoten (3),
wobei beim Empfangen der von dem ersten Knoten (2) übertragenen ersten Daten die ersten Daten über das erste Socket (200) empfangen werden, das beim Erzeugen des ersten und des zweiten Socket (200, 300) verbunden wird, und
beim Senden der empfangenen ersten Daten zu dem zweiten Knoten (3) die empfangenen ersten Daten über das zweite Socket (300) gesendet werden, das beim Erzeugen des ersten und des zweiten Socket (200, 300) verbunden wird.

4. Verfahren nach einem der Ansprüche 1 bis 3, wobei beim Erzeugen des ersten und des zweiten Socket (200, 300) das erste Socket (200) und das zweite Socket (300), die Anwendungsprogramm-Schnittstellen sind, erzeugt werden, indem vorgegebene Funktionen in einer Anwendungsschicht (100) aufgerufen werden.

5. Verfahren nach einem der vorangehenden Ansprüche, wobei beim Kommunizieren Kommunikation über das erste Socket (200) und das zweite Socket (300) durchgeführt wird, die Anwendungsprogramm-Schnittstellen sind, indem vorgegebene Funktionen in einer Anwendungsschicht (100) aufgerufen werden.

6. Vorrichtung zum Verbinden von Knoten (1, 2, 3) heterogener Protokolle, wobei die Vorrichtung umfasst:
eine erste Socket-Kommunikationseinheit (103) in einem Knoten (1) zum Empfangen erster Daten über ein erstes Socket (200), wobei die ersten Daten von einem ersten Knoten (2) unter Verwendung eines ersten Protokolls (400) übertragen werden; und
eine zweite Socket-Kommunikationseinheit (104) in dem Knoten (1) zum Senden der durch die erste Socket-Kommunikationseinheit (103) empfangenen ersten Daten zu einem zweiten Knoten (3) über ein zweites Socket (300), wobei
die erste Socket-Kommunikationseinheit (103) so betrieben werden kann, dass sie Daten über das erste Socket (200) empfängt, indem eine Empfangsfunktion in der Anwendungsschicht (100) in dem Knoten (1) aufgerufen wird, und die Empfangsfunktion Informationen über das erste Socket (200) und die empfangenen Daten enthält, und
die zweite Socket-Kommunikationseinheit (104) so betrieben werden kann, dass sie die empfangenen Daten über das zweite Socket (300) sendet, indem eine Sendefunktion in der Anwendungsschicht (100) aufgerufen wird, und die Sendefunktion Informationen über das zweite Socket (300) und die Informationen über die empfangenen Daten enthält.

7. Vorrichtung nach Anspruch 6, wobei das erste Protokoll (400) IPv6 ist und das zweite Protokoll (500) IPv4 ist oder das zweite Protokoll (500) IPv6 ist und das erste Protokoll (400) IPv4 ist.

8. Vorrichtung nach Anspruch 6 oder Anspruch 7, die des Weiteren eine Doppel-Socket-Erzeugungseinheit (100) zum Erzeugen des ersten Socket (200) und des zweiten Socket (300), die bei Kommunikation auf Basis des ersten Protokolls (400) bzw. der Kommunikation auf Basis des zweiten Protokolls (500) zu verwenden sind; und
eine Doppel-Socket-Verbindungseinheit (102) zum Verbinden des ersten Socket (200) mit dem ersten Knoten (2) und des zweiten Socket (300) mit dem zweiten Knoten (3) umfasst, wobei das erste und das zweite Socket (200, 300) durch die Doppel-Socket-Erzeugungseinheit (101) erzeugt werden,
wobei die erste Socket-Kommunikationseinheit (103) so betrieben werden kann, dass sie Daten über das erste Socket (200) empfängt, das durch die Doppel-Socket-Verbindungseinheit (102) verbunden ist, und die zweite Socket-Kommunikationseinheit (104) so betrieben werden kann, dass sie Daten über das zweite Socket (300) sendet, das durch die Doppel-Socket-Verbindungseinheit (102) verbunden ist.

9. Medium, das computerlesbaren Code umfasst, der, wenn er ausgeführt wird, die Verbindung von Knoten (1, 2, 3) heterogener Protokolle implementiert, wobei es umfasst
Empfangen erster Daten an einem Knoten (1), die von einem ersten Knoten (2) übertragen werden, der ein erstes Protokoll (400) verwendet, über ein erstes Socket (200) des Knotens (1); und
Senden der empfangenen ersten Daten von dem Knoten (1) zu einem zweiten Knoten (3), der ein zweites Protokoll (500) verwendet, über ein zweites Socket (300) des Knotens (1), wobei
beim Empfangen der von dem ersten Knoten (2) übertragenen ersten Daten die ersten Daten über das erste Socket (200) empfangen werden, indem eine Empfangsfunktion in einer Anwendungsschicht (100) aufgerufen wird, und die Empfangsfunktion Informationen über das erste Socket (200) und die ersten Daten enthält, und
beim Senden der empfangenen ersten Daten zu dem zweiten Knoten (3) die empfangenen ersten Daten über das zweite Socket (300) gesendet werden, indem eine Sendefunktion in der Anwendungsschicht (100) aufgerufen wird, und die Sendefunktion Informationen über das zweite Socket (300) und die Informationen über die ersten Daten enthält.

## Revendications

1. Procédé de connexion de noeuds de protocole hétérogènes (1, 2, 3), le procédé comportant les étapes consistant à :
recevoir des premières données à un noeud (1) transférées à partir d'un premier noeud (2), qui utilise un premier protocole (400), via une première interface de connexion (200) au sein du noeud (1) ; et
transmettre les premières données reçues à un second noeud (3), qui utilise un second protocole (500), via une seconde interface de connexion (300) au sein du noeud (1) ; dans lequel
lors de la réception des premières données transférées à partir du premier noeud (2), les premières données sont reçues par l'intermédiaire de la première interface de connexion (200) en appelant une fonction de réception au sein d'une couche application (100) du noeud (1), où la fonction de réception comporte des informations connexes à la première interface de connexion (200) et aux premières données, et
lors de la transmission des premières données reçues du noeud (1) au second noeud (3), les premières données reçues sont transmises par l'intermédiaire de la seconde interface de connexion (300) en appelant une fonction de transmission au sein de la couche application (100), où la fonction de transmission inclut des informations connexes à la seconde interface de connexion (300) et les informations connexes aux premières données.

2. Procédé selon la revendication 1, dans lequel le premier rotocole (400) est le protocole Internet version 6 (IPv6) et le second protocole (500) est le protocole Internet version 4 (IPv4), ou le second protocole (500) est le protocole Internet version 6 (IPv6) et le premier protocole (400) est le protocole Internet version 4 (IPv4).

3. Procédé selon la revendication 1 ou 2, comportant en outre les étapes consistant à générer la première interface de connexion (200) et la seconde interface de connexion (300) à utiliser dans une communication basée sur le premier protocole (400) et le second protocole (500), respectivement ; et
connecter la première interface de connexion générée (200) au premier noeud (2) et connecter la seconde interface de connexion générée (300) au second noeud (3),
dans lequel lors de la réception des premières données transférées à partir du premier noeud (2), les premières données sont reçues par l'intermédiaire de la première interface de connexion (200) connectée lors de la génération des première et seconde interfaces de connexion (200, 300), et
lors de la transmission des premières données reçues au second noeud (3), les premières données reçues sont transmises par l'intermédiaire de la seconde interface de connexion (300) connectée lors de la génération des première et seconde interfaces de connexion (200, 300).

4. Procédé selon l'une quelconque des revendications 1 à 3, dans lequel lors de la génération des première et seconde interfaces de connexion (200,300), la première interface de connexion (200) et la seconde interface de connexion (300), qui sont des interfaces de programmes d'application, sont générées en appelant des fonctions prédéterminées au sein d'une couche application (100).

5. Procédé selon l'une quelconque des revendications précédentes, dans lequel lors de la communication, la communication est exécutée par l'intermédiaire de la première interface de connexion (200) et de la seconde interface de connexion (300), qui sont des interfaces de programmes d'application, en appelant des fonctions prédéterminées au sein d'une couche application (100).

6. Dispositif pour la connexion de noeuds de protocole hétérogènes (1, 2, 3), le dispositif comportant :
une première unité de communication d'interface de connexion (103) dans un noeud (1) pour recevoir des premières données via une première interface de connexion (200), les premières données étant transférées à partir d'un premier noeud (2) au moyen d'un premier protocole (400) ; et
une seconde unité de communication d'interface de connexion (104) au sein du noeud (1) pour transmettre les premières données reçues par la première unité de communication d'interface de connexion (103) à un second noeud (3) via une seconde interface de connexion (300), dans lequel
la première unité de communication d'interface de connexion (103) est exécutable pour recevoir des données par l'intermédiaire de la première interface de connexion (200) en appelant une fonction de réception au sein d'une couche application (100) dans le noeud (1) où la fonction de réception inclut des informations connexes à la première interface de connexion (200) et aux données reçues, et
la seconde unité de communication d'interface de connexion (104) est exploitable pour transmettre les données reçues par l'intermédiaire de la seconde interface de connexion (300) en appelant une fonction de transmission dans la couche application (100), la fonction de transmission incluant des informations connexes à la seconde interface de connexion (300) et les informations connexes aux données reçues.

7. Dispositif selon la revendication 6, dans lequel le premier protocole (400) est le protocole Internet version 6 (IPv6) et le second protocole (500) est le protocole Internet version 4 (IPv4), ou, le second protocole (500) est le protocole Internet version 6 (IPv6) et le premier protocole (400) est le protocole Internet version 4 (IPv4).

8. Dispositif selon la revendication 6 ou 7 comportant en outre une unité de génération d'interface de connexion double (101) pour générer la première interface de connexion (200) et la seconde interface de connexion (300) à utiliser dans la communication basée sur le premier protocole (400) et la communication basée sur le second protocole (500 ), respectivement ; et
une unité de connexion d'interface de connexion double (102) pour connecter la première interface de connexion (200) avec le premier noeud (2) et la seconde interface de connexion (300) avec le second noeud (3), les première et seconde interfaces de connexion (200, 300) étant générées par l'unité de génération d'interface de connexion double (101),
dans lequel la première unité de communication d'interface de connexion (103) est exploitable pour recevoir des données par l'intermédiaire de la première interface de connexion (200), connectée par l'unité de connexion d'interface de connexion double (102), et la seconde unité de communication d'interface de connexion (104) est exécutable pour transmettre des données par l'intermédiaire de la seconde interface de connexion (300), connectée par l'unité de connexion d'interface de connexion double (102).

9. Support comportant un code lisible par ordinateur, qui, lorsqu'il est exécuté, met en oeuvre la connexion de noeuds de protocole hétérogènes (1, 2, 3), comportant les étapes consistant à :
recevoir des premières données à un noeud (1) transférées à partir d'un premier noeud (2), qui utilise un premier protocole (400), via une première interface de connexion (200) du noeud (1) ; et
transmettre les premières données reçues du noeud (1) à second noeud (3), qui utilise un second protocole (500), via une seconde interface de connexion (300) du noeud (1) ; dans lequel
lors de la réception des premières données transférées à partir du premier noeud (2), les premières données sont reçues par l'intermédiaire de la première interface de connexion (200) en appelant une fonction de réception au sein d'une couche application (100), dont la fonction de réception comporte des informations connexes à la première interface de connexion (200) et aux premières données, et
lors de la transmission des premières données reçues au second noeud (3), les premières données reçues sont transmises par l'intermédiaire de la seconde interface de connexion (300) en appelant une fonction de transmission au sein de la couche application (100), où la fonction de transmission inclut des informations connexes à la seconde interface de connexion (300) et les informations connexes aux premières données.
